# EUROPÄISCHE PATENTSCHRIFT

(11) **EP 0 789 176 B1**
(45) Veröffentlichungstag und Bekanntmachung des Hinweises auf die Patenterteilung: **22.11.2000**
(21) Anmeldenummer: 97101310.7
(22) Anmeldetag: 29.01.1997
(51) Int. Cl.: F16L 25/00, F16L 11/11, B29C 57/04

(54) **Verbundrohr mit Muffe und Verfahren zu seiner Herstellung**
Composite pipe with a sleeve and method of manufacturing the same
Tube composite avec manchon et procédé pour sa fabrication

(30) Priorität: 07.02.1996 DE 19604311
(43) Veröffentlichungstag der Anmeldung: 13.08.1997
(73) Patentinhaber: Hegler, Ralph Peter, Dr.-Ing., 97688 Bad Kissingen (DE)
(72) Erfinder: Hegler, Ralph Peter, Dr.-Ing., 97688 Bad Kissingen (DE)
(74) Vertreter: Rau, Manfred, Dr. Dipl.-Ing.

(56) Entgegenhaltungen:
- EP-A- 0 385 465
- EP-B- 0 563 575
- US-A- 4 131 407
- US-A- 5 320 797

## Beschreibung

Die Erfindung betrifft ein Verbundrohr nach dem Oberbegriff des Anspruches 1 und ein Verfahren zu seiner Herstellung nach dem Oberbegriff des Anspruches 5.

Derartige Verbundrohre und Verfahren zu ihrer Herstellung sind aus der EP 0 563 575 B1 und der EP 0 385 465 A2 bekannt. Die glatten Enden, die durch das Zusammenführen und Verschweißen von zwei koextrudierten Schläuchen erzeugt werden, werden durch nachträgliches Aufweiten in einer Muffmaschine zu Muffen verformt. Dieses Aufmuffen ist relativ gut durchführbar, wenn die Verbundrohre aus PVC-U bestehen. Bei Einsatz von Polyolefinen ist das Aufmuffen, d.h. das Aufweiten der Spitzenden bzw. der noch nicht aufgeweiteten Muffenabschnitte sehr schwierig. Aufgrund der teilkristallinen Materialstruktur von Polyolefinen weisen diese einen sogenannten Memory-Effekt auf. Zur Lösung dieser Probleme ist in der AT 398 725 B bereits vorgeschlagen worden, eine solche Muffe zuerst über ihr Sollmaß hinaus aufzuweiten und dann anschließend leicht unter ihr Sollmaß zu komprimieren, wodurch der Memory-Effekt kompensiert werden soll.

Bei PVC-U als Werkstoff für die Verbundrohre findet kein ausgeprägter Kriech-Prozeß statt, während dies bei Polyolefinen als Werkstoff für Verbundrohre sehr ausgeprägt ist. Daraus folgt, daß bei solchen Verbundrohren aus Polyolefin die Gefahr besteht, daß die jeweilige Muffe sich unter der Kraft der von innen an ihr anliegenden Dichtung aufweitet, wodurch die Rohrverbindung undicht wird.

Der Erfindung liegt die Aufgabe zugrunde, ein Verbundrohr nach dem Oberbegriff des Anspruches 1 und ein Verfahren zu seiner Herstellung nach dem Oberbegriff des Anspruches 5 so auszugestalten, daß eine Rohrverbindung auf Dauer dicht ist.

Diese Aufgabe wird erfindungsgemäß bei einem Verbundrohr nach dem Oberbegriff des Anspruches 1 durch die Merkmale im Kennzeichnungsteil des Anspruches 1 gelöst. Die Muffe weist eine hohe Ringsteifigkeit auf, die durch geeignete Dimensionierung so eingestellt werden kann, daß die Ringsteifigkeit der Muffe einerseits und die Ringsteifigkeit des in sie eingeschobenen Verbundrohres etwa gleich sind.

Das Verfahren nach dem Oberbegriff des Anspruches 5 wird erfindungsgemäß durch die Merkmale im Kennzeichnungsteil des Anspruches 5 ausgebildet. Die Unteransprüche geben vorteilhafte Ausgestaltungen der Erfindung wieder.

Einzelheiten der Erfindung ergeben sich aus der nachfolgenden Beschreibung anhand der Zeichnung. Es zeigt
- Fig. 1: eine Rohrverbindung bestehend aus zwei Verbundrohren, von denen eines mit einer Muffe versehen ist, im Halbschnitt,
- Fig. 2: ein Vorerzeugnis für ein Verbundrohr mit Muffe im Längsschnitt,
- Fig. 3: das Aufweiten des Vorerzeugnisses zu einer Muffe im Längsschnitt,
- Fig. 4: eine Rohrverbindung in einer Darstellung entsprechend Fig. 1 mit einer gegenüber Fig. 1 abgewandelten Muffe,
- Fig. 5: eine Vorrichtung zur Herstellung eines Verbundrohres in Draufsicht,
- Fig. 6: einen vertikalen Teilschnitt durch die Vorrichtung nach Fig. 5 und
- Fig. 7: einen vertikalen Teilschnitt entsprechend Fig. 6 in einem anderen Produktionsstadium.

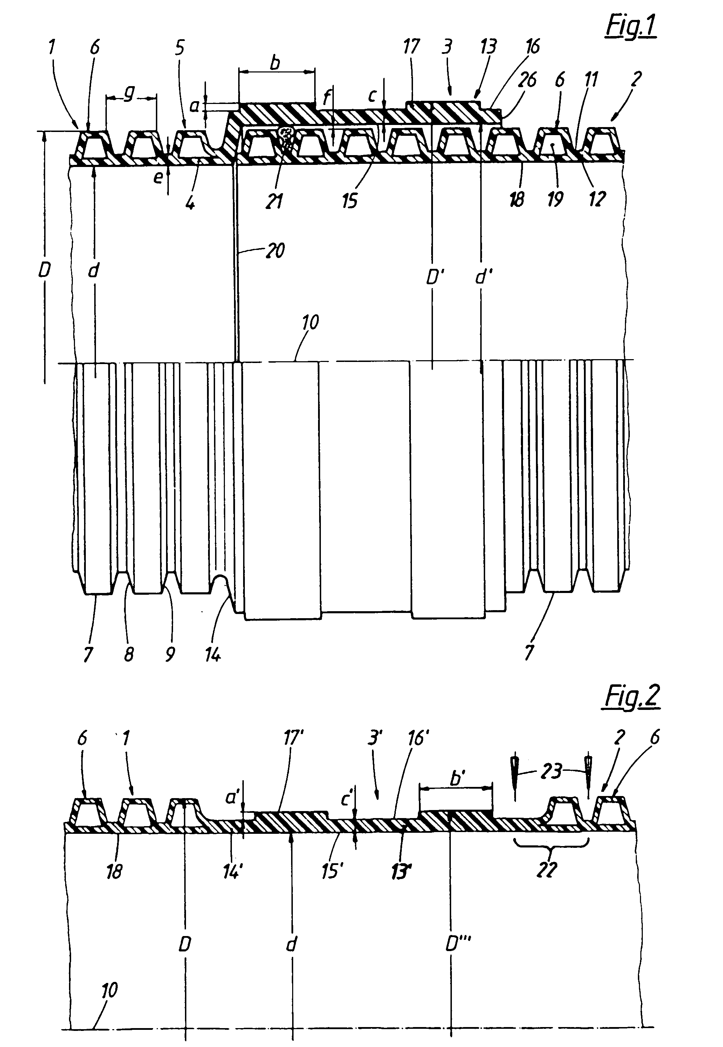

In Fig. 1 sind zwei grundsätzlich gleich aufgebaute Verbundrohre 1, 2 dargestellt, die mittels einer an dem einen Verbundrohr 1 ausgebildeten Muffe 3 miteinander verbunden sind. Die Verbundrohre 1, 2 weisen jeweils ein durchgehendes zylindrisches Innen-Rohr 4 und ein gewelltes Außen-Rohr 5 auf. Innen-Rohr 4 und Außen-Rohr 5 sind miteinander verschweißt; auf die Herstellung wird weiter unten noch eingegangen. Das Außen-Rohr 5 ist im Querschnitt gewellt, also als Wellrohr ausgebildet. Jeder Wellabschnitt 6 hat den Querschnitt eines sich nach außen leicht verjüngenden Trapezes. Jeder Wellabschnitt 6 weist einen äußeren ringzylindrischen Außenwand-Abschnitt 7 und zwei Seitenwand-Abschnitte 8, 9 auf. Diese Seitenwand-Abschnitte 8, 9 sind - bezogen auf die Mittel-Längs-Achse 10 des jeweiligen Verbundrohres 1 bzw. 2 - radial nach außen aufeinanderzu geneigt. Die Basis des erwähnten Trapezes wird durch das jeweilige Innen-Rohr 4 gebildet. Zwischen zwei einander benachbarten Wellabschnitten 6 ist ein Wellental 11 gebildet, in dem die Seitenwand-Abschnitte 8, 9 zweier benachbarter Wellabschnitte 6 mittels eines ebenfalls ringförmigen Fußabschnitts 12 miteinander verbunden sind. In diesem Bereich ist jeweils das Außen-Rohr 5 mit dem Innen-Rohr 4 verschweißt.

Die an dem in Fig. 1 links dargestellten Verbundrohr 1 ausgebildete Muffe 3 weist einen in seiner Grundform ringzylindrischen Verbindungsabschnitt 13 auf, der mittels eines Übergangsabschnitts 14 in einen Fußabschnitt 12 des Außen-Rohrs 5 und an derselben Stelle in das Innen-Rohr 4 des Verbundrohres 1 übergeht. Die Verbundrohre 1, 2 weisen im Bereich ihrer Außenwand-Abschnitte 7 einen Außendurchmesser D auf, der geringfügig kleiner ist als der Innendurchmesser d' der glatt-zylindrischen Innenwand 15 der Muffe 3. Der Verbindungsabschnitt 13 weist an seiner Außenseite 16 Verstärkungsstege 17 auf, die - bezogen auf die Grundform des Verbindungsabschnitts 13 ringzylindrisch ausgebildet sind. Sie weisen eine - bezogen auf die Mittel-Längs-Achse 10 - radiale Dicke a und eine Länge b in Richtung der Achse 10 auf. Es gilt im dargestellten Ausführungsbeispiel a < b. Als Zwischen-Grenzwert gilt a ≤ b und als äußerster Grenzwert a ≤ 2b. Die Wanddicke c der Muffe 3 ohne Berücksichtigung der Verstärkungsstege 17 ist in der Regel größer als die Summe der Wanddicken e des Verbundrohres im Bereich des Fußabschnitts 12. Es gilt also in der Regel e < c. Es kann aber auch gelten e ≤ c. Die Innenwand 18 des Innen-Rohres 4 weist einen Durchmesser d auf. Die Muffe weist im Bereich der Verstärkungsstege 17 ihren maximalen Außendurchmesser D' auf. Es gilt für die maximale Wanddicke (D - d)/2 des Verbundrohres 1 bzw. im Vergleich zur maximalen Wanddicke (D' - d')/2 der Muffe 3 (D' - d')/2 < (D - d)/2. Wie Fig. 1 erkennen läßt, ist die Muffe 3 massiv ausgebildet, weist also nicht die im jeweiligen Wellenabschnitt 6 ausgebildeten Hohlräume 19 auf.

Bei der Montage wird in ein der Stirnseite 20 des Verbundrohres 2 benachbartes Wellental 11 ein Dichtungsring 21 eingelegt und das Verbundrohr 2 mit seiner Stirnseite 20 voran in die Muffe 3 am Verbundrohr 1 hineingeschoben. Da der Dichtungsring 21 radial über die Außenwand-Abschnitte 7 der benachbarten Wellabschnitte 6 vorsteht, kommt er zur Anlage an der Innenwand 15 des Verbindungsabschnitts 13 der Muffe 3 und wird unter Erzeugung der entsprechenden Dichtwirkung radial auf den Durchmesser d' der Innenwand 15 zusammengedrückt. Das durch die Differenz d' - D = f gebildete Spiel f zwischen den ringförmigen Außenwand-Abschnitten 7 des Verbundrohres 2 und der Innenwand 15 der Muffe 3 ist sehr klein; es bewegt sich - je nach Rohrdurchmesser D - im Bereich von einigen Zehntel Millimetern bis zu wenigen Millimetern. Die Wellabschnitte 6 haben im Ausführungsbeispiel nach Fig. 1 eine Teilung g in Richtung der Achse 10, für die im Vergleich zur Länge b der Verstärkungsstege 17 gilt g < b.

In Fig. 2 ist ein Zwischenprodukt dargestellt, aus dem das Verbundrohr 1 mit Muffe 3 und das anschließende Verbundrohr 2 gebildet werden. Identische Teile sind mit identischen Bezugsziffern versehen. Die Teile, aus denen die Muffe 3 hergestellt wird, sind mit gleichen Bezugsziffern und einem hochgesetzten Strich bezeichnet. Der Rohrabschnitt mit dem Verbundrohr 1, einem Muffenabschnitt 3' und das anschließende Verbundrohr 2 sind einstückig ausgebildet. Zwischen dem Verbindungsabschnitt 13' des Muffenabschnitts 3' und dem Verbundrohr 2 befindet sich ein Abfall-Abschnitt 22, der mit zwei durch Trennmesser 23 angedeuteten Trennschnitten herausgeschnitten wird. Bei diesem Zwischenprodukt hat der Muffenabschnitt 3' noch einen Innendurchmesser d, der identisch ist dem Innendurchmesser d der Verbundrohre 1 bzw. 2. Der Außendurchmesser D"' des Muffenabschnitts 3' im Bereich der Verstärkungsstege 17' ist kleiner als der Außendurchmesser D der Verbundrohre 1, 2. Für die axiale Länge b' der Verstärkungsstege 17', deren radiale Dicke a' und die Wanddicke c' gilt jeweils im Vergleich zum Endprodukt nach Fig. 1: b ≅ b' und a/c ≅ a'/c'.

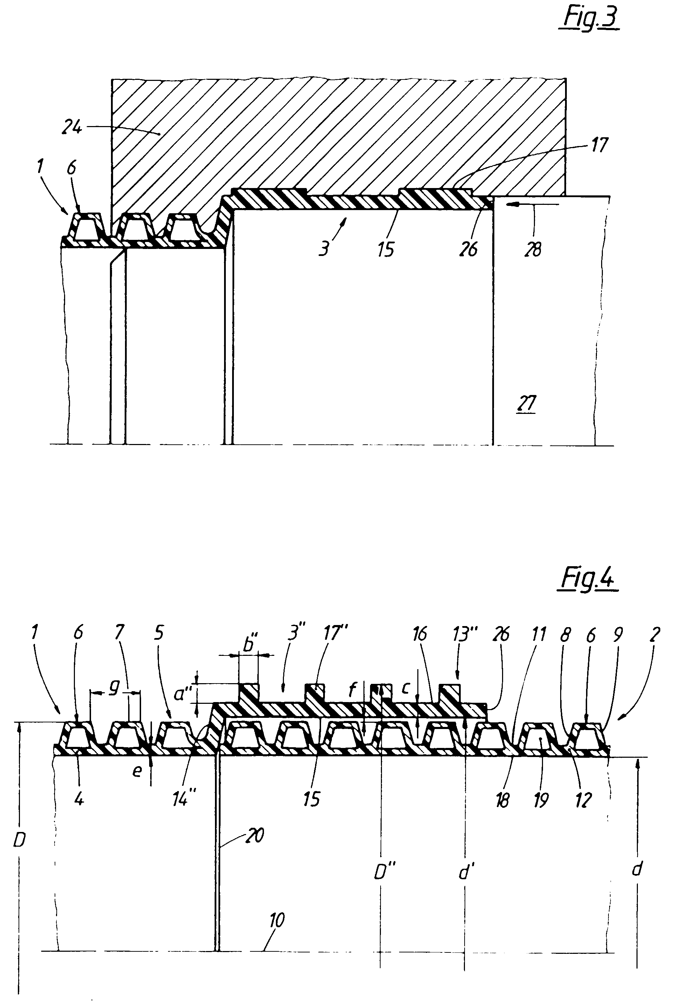

In Fig. 3 ist als Prinzipdarstellung die Aufweitung des Muffenabschnitts 3' aus Fig. 2 zur Muffe 3 dargestellt. Hierzu wird der Muffenabschnitt 3' in einer Aufheizstation einer sogenannten Aufmuffmaschine durch Erwärmen plastifiziert. Anschließend wird der Muffenabschnitt 3' in einer von der Aufheizstation gesonderten Station der Aufmuffmaschine aufgemufft. Hierzu wird er in einer Form 24 gehalten. Es wird ein Dorn 27, der an der Innenwand des Muffenabschnitts 3' und an seiner Stirnseite 26 anliegt, in Richtung 28 in den Muffenabschnitt 3' eingeführt. Anstelle des Dorns 27 kann auch ein Spreizkern eingesetzt werden. Der Muffenabschnitt 3' wird hierbei über das Sollmaß d' hinaus aufgeweitet, weshalb in Fig. 3 die dargestellte Muffe mit der Bezugsziffer 3 bezeichnet ist. Anschließend wird in einer räumlich wieder gesonderten Stauchstation die aufgeweitete Muffe 3 unter Sollmaß komprimiert, so daß die Muffe 3 die in Fig. 1 dargestellte und vorbeschriebene Form ohne Nachschrumpfen annimmt. Es erfolgt hierbei eine Kompensation des sogenannten Memory-Effektes. Das Verbundrohr 1 mit der Muffe 3 und gleichermaßen das Verbundrohr 2 bestehen aus einem Polyolefin, und zwar insbesondere Polyethylen bzw. Polypropylen.

In Fig. 4 ist eine Rohrverbindung dargestellt, die sich von der nach Fig. 1 nur dadurch unterscheidet, daß die Verstärkungsstege 17'' eine Länge b'' in Richtung der Achse 10 aufweisen, die kleiner ist als die Länge b beim Ausführungsbeispiel nach Fig. 1. Die radiale Dicke a'' ist etwas größer als beim Ausführungsbeispiel nach Fig. 1. Auch hier ist dargestellt a'' < b''. Grundsätzlich gilt aber als Zwischen-Grenzwert a'' ≤ b'' und als äußerster Grenzwert a" ≤ 2b". Im übrigen sind in Fig. 4 alle Teile, die sich von dem Ausführungsbeispiel nach Fig. 1 nur durch die Abmaße unterscheiden, mit derselben Bezugsziffer und einem hochgesetzten Doppelstrich bezeichnet, ohne daß es einer erneuten Beschreibung bedürfte.

Die Herstellung des in Fig. 2 dargestellten Zwischenerzeugnisses erfolgt auf einer Vorrichtung zur Herstellung von Kunststoff-Verbundrohren, wie sie in ihrem grundsätzlichen Aufbau bekannt ist und wie sie beispielsweise in der EP 0 563 575 B (entsprechend US 5 320 797 - entsprechend JP Hei-5-71 877) dargestellt und beschrieben ist.

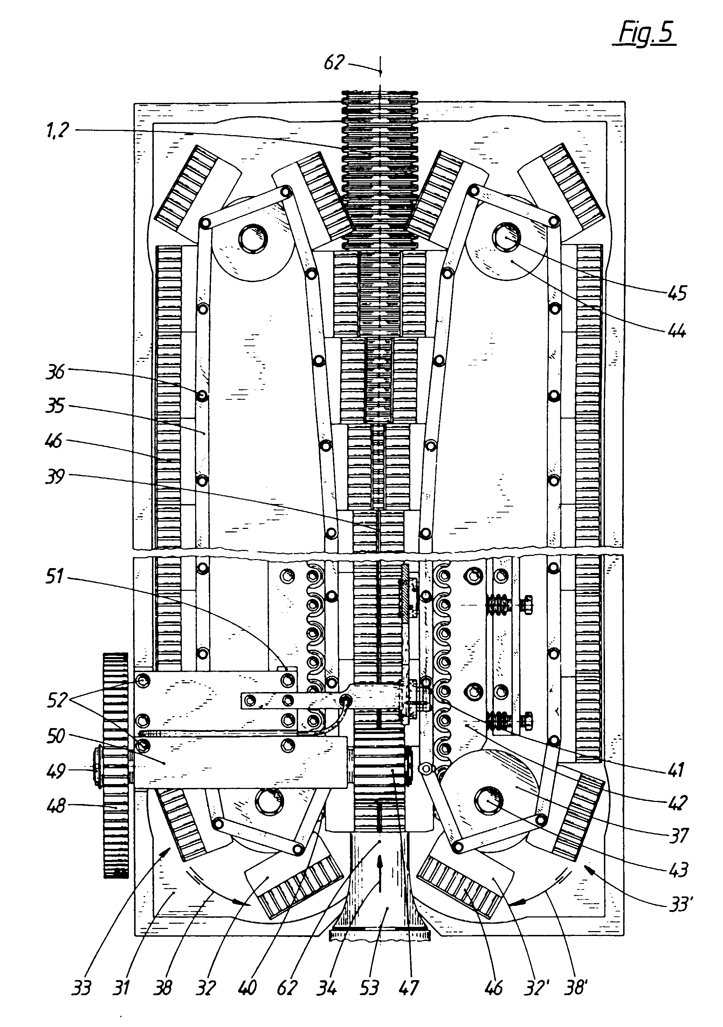

Wie Fig. 5 erkennen läßt, weist eine Vorrichtung zur Herstellung der gewellten Kunststoff-Verbundrohre einen Maschinentisch 31 auf, auf dem Halbkokillen 32 bzw. 32' angeordnet sind, die jeweils zu zwei sogenannten Ketten 33 bzw. 33' miteinander verbunden sind. Hierzu ist an jeder Halbkokille 32 bzw. 32' in ihrem außenliegenden, in Produktionsrichtung 34 vorderen Bereich eine Lasche 35 mittels eines Anlenkbolzens 36 angelenkt, die an der entsprechenden Stelle der nachfolgenden Halbkokille 32 bzw. 32' ebenfalls mittels eines solchen Anlenkbolzens 36 angebracht ist. Die so gebildeten Ketten 33, 33' sind an ihrem in Produktionsrichtung 34 gesehen rückwärtigen Ende über als sogenannte Einlaufrollen 37 dienende Umlenkräder geführt. Die einzelnen Halbkokillen 32, 32' werden beim Umlauf der Ketten 33, 33' entsprechend den Umlaufrichtungspfeilen 38 bzw. 38' in eine Formstrecke 39 eingeschwenkt, in der jeweils zwei Halbkokillen 32, 32' zu einem Kokillenpaar vereinigt werden, wobei wiederum in Produktionsrichtung 34 hintereinanderfolgende Kokillenpaare dicht an dicht liegen. Um ein schnelles Schließen der Halbkokillen 32, 32' zu einer parallelen und aneinanderliegenden Stellung zu erreichen, sind sogenannte Schließrollen 4o vorgesehen, die die in Produktionsrichtung 34 hinteren Enden der Halbkokillen 32, 32' beschleunigt zusammenführen.

In der Formstrecke 39 selber werden die aneinanderliegenden Halbkokillen 32, 32' mittels Führungsrollen 41, die in Führungsleisten 42 drehbar gelagert sind, gegeneinander gedrückt. Die Einlaufrollen 37 sind um Achszapfen 43 drehbar am Maschinentisch 31 angebracht. Am in Produktionsrichtung 34 vorderen Ende des Maschinentisches 31 sind ebenfalls als Umlenkräder dienende Rücklaufrollen 44 um Achszapfen 45 drehbar gelagert, um die die Ketten 33 bzw. 33' umgelenkt und zu den Einlaufrollen 37 zurückgeführt werden. Wie Fig. 5 zu entnehmen ist, enden die Führungsleisten 42 mit Führungsrollen 41 schon um die Länge mehrerer Halbkokillen 32 bzw. 32' vor den Rücklaufrollen 44, so daß die Halbkokillen 32 bzw. 32' wieder parallel zueinander und quer zur Produktionsrichtung 34 voneinander wegbewegt werden können, bevor sie von den Rücklaufrollen 44 verschwenkt werden.

An der Oberseite der Halbkokillen 32, 32' ist eine Verzahnung 46 ausgebildet, wobei die beiden Verzahnungen 46 der einander paarweise zugeordneten Halbkokillen 32, 32' miteinander fluchten, so daß von oben ein gemeinsames Antriebsritzel 47 in diese Verzahnung 46 eingreifen kann, das die Halbkokillen 32, 32' in der Formstrecke 39 als geschlossene Form durch die Formstrecke 39 schiebt. Der Antrieb dieses Antriebsritzels 47 erfolgt in üblicher Weise von einem nicht dargestellten Motor über ein Antriebszahnrad 48, das auf einer Welle 49 drehfest befestigt ist, die wiederum das Antriebsritzel 47 trägt. Die Welle 49 ist in einem Lagerbock 5o gelagert, der über Distanzprismen 51 gegenüber dem Maschinentisch 31 abgestützt und mit letzterem mittels Schrauben 52 fest verbunden ist.

Auf der dargestellten Vorrichtung werden die Verbundrohre 1, 2 mit dazwischen befindlichen Muffenabschnitten 3' endlos hergestellt. Hierzu ist ein Extruder vorgesehen, von dem nur ein Spritzkopf 53 angedeutet ist.

Er weist einen Düsenkörper 54 auf, dessen Einzelheiten allgemein bekannt sind, beispielsweise aus der EP 0 563 575 B (entsprechend US 5 320 797 - JP Hei-5-71 877).

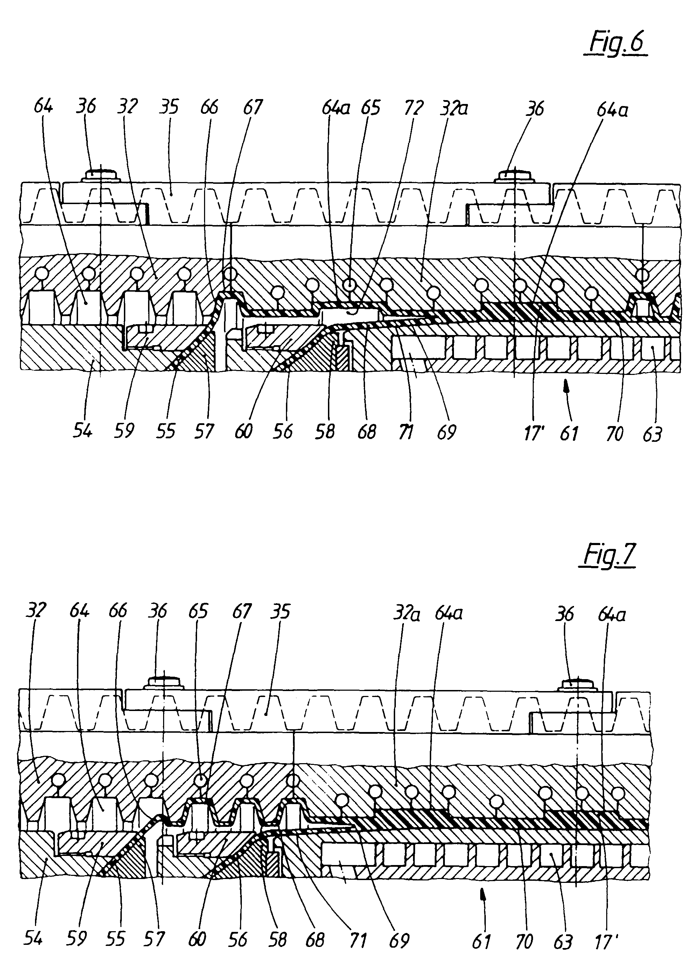

Die Ausgestaltung des Spritzkopfes 53 zu Beginn der Formstrecke 39 ist in Fig. 6 dargestellt. Im Düsenkörper 54 sind ein Außen-Kanal 55 und ein Innen-Kanal 56 für vom Extruder zugeführte Kunststoffschmelze ausgebildet. Am Ende des Außen-Kanals 55 mündet dieser in eine Außen-Düse 57 und der Innen-Kanal 56 in eine Innen-Düse 58. Beide Düsen 57, 58 können mittels Düsenringen 59, 60 in ihren Abmaßen verstellt werden. Am Düsenkörper 54 ist ein als Temperierglocke ausgebildeter Kalibrierdorn 61 angebracht, der ebenfalls konzentrisch zur Mittel-Längs-Achse 62 der Formstrecke 39 angeordnet ist. In seinem Inneren ist der Kalibrierdorn 61 mit Temperierkanälen 63 versehen, durch die Kühlmedium oder Heizmedium geführt werden kann. Wie die Fig. 6 und 7 erkennen lassen, sind in den Halbkokillen, von denen in diesen Figuren nur die Halbkokillen 32 dargestellt sind, ringförmige Formausnehmungen 64 ausgebildet, die in bekannter Weise an Teilvakuum-Kanäle 65 angeschlossen sind. Die vom Extruder zugeführte Kunststoffschmelze strömt zum Teil durch den Außen-Kanal 55 zur Außen-Düse 57, aus der ein Außen-Schlauch 66 extrudiert wird, der sich unter Formung eines mit den Wellabschnitten 6 versehenen Schlauches 67 aufgrund des Teilvakuums in die Formausnehmungen 64 legt. Er bildet nach entsprechender Abkühlung und Erstarrung das gewellte Außen-Rohr 5 des Verbundrohres 1 bzw. 2.

Ein anderer Teil der Schmelze strömt durch den Innen-Kanal 56 zur Innen-Düse 58, aus der ein weiterer Schlauch, nämlich ein Innen-Schlauch 68 austritt, der auf den Kalibrierdorn 61 gelangt. Der Kalibrierdorn 61 weist benachbart zur Innen-Düse 58 und - in Produktionsrichtung 34 - unmittelbar hinter dieser einen langgezogenen konischen Bereich 69 auf, dessen - bezogen auf die Produktionsrichtung 34 - Anfangsbereich einen kleineren Innendurchmesser aufweist als der sich anschließende zylindrische Kalibrierabschnitt 70 des Kalibrierdorns 61, in den der konische Bereich 69 übergeht.

In einer Halbkokille 32a, zu der selbstverständlich eine zweite entsprechende nicht dargestellte Halbkokille gehört, sind anstelle der Formausnehmungen 64 zur Formung der Wellabschnitte 6 Formausnehmungen 64a zur Formung des Muffenabschnitts 3' mit den Verstärkungsstegen 17' ausgebildet. Wie Fig. 6 entnehmbar ist, wird der Außen-Schlauch 66 auch in die Formausnehmungen 64a extrudiert und legt sich als Schlauch an deren Wandung. Die Formausnehmung 64a ist anfangs nicht vollständig gefüllt. Der Innen-Schlauch 68 fließt über die den konischen Bereich 69 begrenzende Wand 71 des Kalibrierdorns 61 und hat - wie Fig. 6 erkennen läßt - anfangs noch keine Verbindung mit dem Außen-Schlauch 66. Vor dem Übergang zwischen der Wand 71 und dem Kalibrierabschnitt 70 staut sich im Überschuß zugeführte Kunststoffschmelze des Außen-Schlauches 66, die dazu dient, den erwähnten anfänglichen Freiraum 72 in den zu erzeugenden Verstärkungsstegen 17' zu füllen. Während bei der Darstellung in Fig. 6 dieser Freiraum 72 noch vorhanden ist, ist er in dem in Fig. 7 dargestellten Produktionsfortschritt nicht mehr vorhanden. Damit die erforderliche Mehrmenge an Kunststoffschmelze bereitgestellt wird, läuft die Form während der Herstellung des Muffenabschnitts 3' langsamer. Die in dem konischen Bereich 69 jeweils gesammelte überschüssige Kunststoffschmelze dient zum Füllen der Freiräume 72. Das Volumen des konischen Bereichs 69 muß also so abgestimmt sein, daß diese Funktion exakt erfüllt wird, ohne daß Kunststoffschmelze entgegen der Produktionsrichtung 34 in den Bereich zwischen Innen-Düse 58 und Außen-Düse 57 gedrückt wird. Im Bereich des Kalibrierabschnitts 70 werden im übrigen der Innen-Schlauch 68 und der Außen-Schlauch 67 an ihren Berührungsstellen miteinander verschweißt.

## Patentansprüche

1. Verbundrohr mit
- einem Innen-Rohr (4),
- einem gewellten Außen-Rohr (5),
-- mit aufeinanderfolgenden, jeweils durch einen Fußabschnitt (12) miteinander verbundenen Wellabschnitten (6), wobei die Fußabschnitte (12) mit dem Innen-Rohr (4) verschweißt sind,
- einer gemeinsamen Mittel-Längs-Achse (10), und
- einer einstückig mit dem Innen-Rohr (4) und dem Außen-Rohr (5) ausgebildeten Muffe (3),
-- mit einem Verbindungsabschnitt (13) mit im wesentlichen zylindrischer Grundform,
**dadurch gekennzeichnet,**
daß es aus einem Polyolefin besteht und
daß zur Erhöhung der Ringsteifigkeit der Muffe (3) auf der Außenseite des Verbindungsabschnitts (13) mindestens ein Verstärkungssteg (17) ausgebildet ist, für dessen Länge b in Richtung der Mittel-Längs-Achse (10) im Verhältnis zu seiner Dicke a radial zur Mittel-Längs-Achse (10) gilt: a ≤ 2b.

2. Verbundrohr nach Anspruch 1, **dadurch gekennzeichnet,**
daß gilt: a ≤ b.

3. Verbundrohr nach Anspruch 2, **dadurch gekennzeichnet,**
daß gilt: a < b.

4. Verbundrohr nach einem der Ansprüche 1 bis 3, **dadurch gekennzeichnet,**
daß der Innendurchmesser d' der Muffe (3) geringfügig größer ist als der Außendurchmesser D des Verbundrohres (1, 2).

5. Verfahren zur Herstellung eines Verbundrohres nach einem der Ansprüche 1 bis 4 mit folgenden Verfahrensschritten:
- Extrusion eines Außen-Schlauches (66),
- jeweils aufeinanderfolgendes abschnittsweises Verformen des Außen-Schlauches (66)
-- in einem ersten Abschnitt zu den Außenquerschnitt des Verbundrohres (1, 2) bildenden Wellabschnitten (6) und
-- in einem zweiten Abschnitt zu dem Außenquerschnitt eines Muffenabschnitts (3'),
- Verschweißen des Innen-Schlauches (68) und des Außen-Schlauches (66)
-- jeweils teilweise im ersten Abschnitt und
-- vollflächig im zweiten Abschnitt,
- Durchtrennen des endlosen Rohres im Bereich eines Muffenabschnitts (3'), und
- Aufweiten des Muffenabschnitts (3') zu einer Muffe (3),
**dadurch gekennzeichnet,**
daß der zweite Abschnitt während der Verformung zu dem Außenquerschnitt eines Muffenabschnitts (3') mit mindestens einem einen Freiraum (72) aufweisenden Verstärkungssteg (17') versehen wird und
daß der Freiraum (72) in jedem Verstärkungssteg (17') aufgefüllt wird.

## Claims

1. A composite pipe comprising
- an internal pipe (4);
- a corrugated external pipe (5)
-- having successive corrugated sections (6) connected with each other by a foot section (12), the foot sections (12) being welded onto the internal pipe (4);
- a common central longitudinal axis (10); and
- a socket (3) formed in one piece with the internal pipe (4) and the external pipe (5) and
-- having a connecting section (13) of substantially cylindrical basic shape;
**characterized**
in that it consists of a polyolefin; and
in that, for increase of the annular rigidity of the socket (3), at least one reinforcing rib (17) is formed on the outside of the connecting section (13), a ≤ 2b applying to the length b of the reinforcing rib (17) in the direction of the central longitudinal axis (10) in relation to its thickness a radial of the central longitudinal axis (10).

2. A composite pipe according to claim 1, **characterized** in that a ≤ b applies.

3. A composite pipe according to claim 2, **characterized** in that a < b applies.

4. A composite pipe according to one of claims 1 to 3, **characterized** in that the inside diameter d' of the socket (3) slightly exceeds the outside diameter D of the composite pipe (1, 2).

5. A method for the manufacture of a composite pipe according to one of claims 1 to 4, comprising the following method steps:
- extruding an external tube (66);
- deforming the external tube (66) successively and in portions
-- in a first portion to form the corrugated sections (6), which constitute the outer cross-sectional shape of the composite pipe (1, 2), and
-- in a second portion to form the outer cross-sectional shape of a socket portion (3');
- welding together the internal tube (68) and the external tube (66)
-- partially in the first portion, and
-- over the full surface in the second portion;
- cutting through the continuous pipe in the vicinity of a socket portion (3'); and
- expanding the socket portion (3') to form a socket (3);
**characterized**
in that the second portion, when deformed to constitute the outer cross-sectional shape of a socket portion (3'), is provided with at least one reinforcing rib (17') which has a free space (72); and
in that the free space (72) in each reinforcing rib (17') is filled up.

## Revendications

1. Tube composite comportant
- un tube intérieur (4),
- un tube extérieur ondulé (5),
-- avec des sections ondulées (6) successives raccordées entre elles respectivement par une section de pied (12), les sections de pied (12) étant soudées avec le tube intérieur (4),
- un axe longitudinal médian commun (10), et
- un manchon (3) formé d'un seul tenant avec le tube intérieur (4) et avec le tube extérieur (5),
-- une section de liaison (13) ayant une forme de base sensiblement cylindrique,
caractérisé en ce que
le tube composite consiste en une polyoléfine et en ce que pour accroître la rigidité annulaire du manchon (3) sur le côté extérieure de la section de liaison (13), il est formé au moins une âme ou nervure de renforcement (17), pour la longueur b de laquelle dans la direction de l'axe longitudinal médian (10) par rapport à son épaisseur a radialement à l'axe longitudinal médian (10), on appliquera :
a ≤ 2b.

2. Tube composite selon la revendication 1, caractérisé en ce que l'on appliquera : a ≤ b.

3. Tube composite selon la revendication 2, caractérisé en ce que l'on appliquera : a < b.

4. Tube composite selon l'une des revendications 1 à 3, caractérisé en ce que,
le diamètre intérieur d' du manchon (3) est très légèrement supérieur au diamètre extérieur D du tube composite (1,2).

5. Dispositif pour la fabrication d'un tube composite selon l'une des revendications 1 à 4 avec les étapes de procédé suivantes :
- Extrusion d'un tube flexible extérieur (66),
- Déformation par sections successives du tube flexible extérieur (66)
-- dans une première section par rapport aux sections ondulées (6) formant la section transversale extérieure du tube composite (1,2) et
-- dans une seconde section par rapport à la section transversale extérieure d'une section de manchon (3'),
- Soudage du tube flexible intérieur (68) et du tube flexible extérieur (66)
-- respectivement en partie dans la première section et
-- sur toute la surface dans la seconde section,
-- Séparation du tube sans fin au niveau d'une section de manchon (3'), et
-- Elargissement de la section de manchon (3') en un manchon (3),
caractérisé en ce que,
la seconde section est munie d'au moins une âme ou nervure de renforcement (17') présentant un espace libre (72) pendant la déformation en la section extérieure transversale d'une section de manchon (3') et en ce que l'espace libre (72) est rempli dans chaque âme de renforcement (17').
